# FASCICULE DE BREVET EUROPEEN

(11) **EP 1 113 990 B1**
(45) Date de publication et mention de la délivrance du brevet: **12.02.2003**
(21) Numéro de dépôt: 99941568.0
(22) Date de dépôt: 10.08.1999
(51) Int. Cl.: C01D 3/16

(54) **PROCEDE POUR LA PRODUCTION DE CRISTAUX DE CHLORURE DE SODIUM RESPECTUEUX DE L'ENVIRONNEMENT**
UMWELTSCHONENDES VERFAHREN ZUR HERSTELLUNG VON NATRIUMCHLORIDKRISTALLEN
METHOD FOR PRODUCING SODIUM CHLORIDE CRYSTALS RESPECTING ENVIRONMENT

(30) Priorité: 26.08.1998 FR 9810751
(43) Date de publication de la demande: 11.07.2001
(73) Titulaire: SOLVAY (Société Anonyme), 1050 Bruxelles (BE)
(72) Inventeur: NINANE, Léon, F-54110 Dombasle-sur-Meurthe (FR); HUMBLOT, Cédric, F-54110 Dombasle-sur-Meurthe (FR); GERARD, Pascal, B-7070 Le Roeulx (BE)
(74) Mandataire: Dufrasne, Eugène
(86) Numéro de dépôt international: EP9905825
(87) Numéro de publication internationale: WO00012433

(56) Documents cités:
- EP-A- 0 638 518
- WO-A-93/04983
- DE-B- 1 209 562
- GB-A- 1 500 288
- T.F. O'BRIEN: "Control of Sulfates in membrane-cell brine systems" MODERN CHLOR-ALKALI TECHNOLOGY, vol. 3, 1986, pages 326-349, XP002101883
- DATABASE WPI Section Ch, Week 9220 Derwent Publications Ltd., London, GB; Class E34, AN 92-164923 XP002101884 & SU 1 666 445 A (KOLESNICHENKO V T), 30 juillet 1991 (1991-07-30)

## Description

La présente invention concerne un procédé pour la production de cristaux de chlorure de sodium.

Une technique largement utilisée pour produire du chlorure de sodium solide consiste à le cristalliser par évaporation d'une saumure de chlorure de sodium. La saumure de chlorure de sodium utilisée dans cette technique peut être par exemple de l'eau de mer. En variante, elle peut être obtenue par dissolution de sel gemme dans de l'eau. Les saumures utilisées dans cette technique de fabrication de chlorure de sodium sont habituellement contaminées par des composés indésirables qui risquent de contaminer le chlorure de sodium. C'est notamment le cas du chlorure de potassium, du carbonate de sodium et du sulfate de sodium, qui, s'ils ne sont pas éliminés de la saumure avant l'évaporation de celle-ci, risquent de se retrouver associés aux cristaux de chlorure de sodium. L'élimination de ces composés indésirables de la saumure pose par ailleurs le problème de leur évacuation et de leur stockage (généralement dans des décharges publiques) dans des conditions adaptées pour éviter qu'ils polluent l'environnement.

On connaît un procédé pour fabriquer des cristaux de chlorure de sodium au départ d'une saumure de chlorure de sodium, contaminée par du chlorure de potassium et des ions sulfate (US-A-4 547 197). Selon ce procédé connu, on additionne de l'hydroxyde de calcium à la saumure pour précipiter les ions sulfate à l'état de sulfate de calcium, puis du carbonate de sodium pour précipiter les ions calcium à l'état de carbonate de calcium. La solution aqueuse recueillie après séparation des précipités est soumise à une évaporation à une température d'environ 120 °C pour cristalliser du chlorure de sodium que l'on recueille et l'eau mère de la cristallisation est refroidie à environ 45 °C (de préférence en la soumettant à une détente) pour cristalliser simultanément du chlorure de sodium, du chlorure de potassium et du sulfate de sodium. Dans ce procédé connu, la coprécipitation des trois sels (chlorure de sodium, chlorure de potassium et sulfate de sodium) occasionne des difficultés pour l'évacuation de ceux-ci. Une solution suggérée dans le document US-4 547 197 consiste à disperser le mélange des trois sels dans de l'eau froide, de manière à dissoudre sélectivement le chlorure de sodium et le chlorure de potassium, tandis que le sulfate de sodium recristallise à l'état de sel de Glauber.

Le procédé connu précité présente le désavantage d'une grande complexité, imposée par la nécessité de se débarrasser du mélange des trois sels (chlorure de sodium, chlorure de potassium et sulfate de sodium) sans nuire à l'environnement. Ce procédé connu présente le désavantage supplémentaire qu'il consomme une quantité importante de composé de calcium (hydroxyde de calcium) pour extraire les ions sulfate de la saumure.

L'invention tend à remédier aux inconvénients du procédé connu décrit ci-dessus, en fournissant un procédé pour la fabrication de cristaux de chlorure de sodium au départ d'une saumure contaminée par du chlorure de potassium et des ions sulfate, qui permet une diminution sensible de la consommation en composé de calcium pour extraire les ions sulfate de la saumure et qui simplifie par ailleurs l'évacuation et le stockage des résidus solides de l'épuration.

En conséquence, l'invention concerne un procédé pour la production de cristaux de chlorure de sodium au départ d'une saumure de chlorure de sodium contaminée par du chlorure de potassium et des ions sulfate, selon lequel, dans une première étape on additionne un composé du calcium à la saumure pour précipiter du sulfate de calcium que l'on écarte et on recueille une solution aqueuse, dans une deuxième étape on soumet la solution aqueuse de la première étape à une évaporation pour cristalliser du chlorure de sodium et on recueille séparément des cristaux de chlorure de sodium et une eau mère, et, dans une troisième étape on soumet l'eau mère de la deuxième étape à un refroidissement pour cristalliser une partie au moins du chlorure de potassium; selon l'invention, on règle la quantité de composé de calcium à la première étape et le refroidissement à la troisième étape de manière que les ions sulfate précipitent à l'état de glaubérite à la première étape et de glasérite à la troisième étape.

Dans le procédé selon l'invention, la saumure de chlorure de sodium est, par définition, une solution aqueuse de chlorure de sodium. Elle peut invariablement être une solution aqueuse saturée ou insaturée en chlorure de sodium. Sa teneur pondérale en chlorure de sodium est avantageusement supérieure à 5 %, habituellement au moins égale à 10 %. Les saumures contenant au moins 20 % en poids de chlorure de sodium sont spécialement recommandées. Les saumures sensiblement saturées à la température ambiante sont préférées.

La saumure de chlorure de sodium mise en oeuvre dans le procédé selon l'invention est contaminée par des impuretés. Ces impuretés comprennent du chlorure de potassium et des ions sulfate. Les ions sulfate sont par exemple présents à l'état de sulfate de sodium dissous. Les impuretés sont normalement présentes dans la saumure en une quantité inférieure à la teneur en chlorure de sodium.

Dans la première étape du procédé selon l'invention, le composé du calcium a pour fonction de réagir avec les ions sulfate pour former du sulfate de calcium qui cristallise. Le composé du calcium doit dès lors être choisi parmi ceux qui sont susceptibles de réagir avec les ions sulfate, en particulier avec les sulfates des métaux alcalins (notamment le sulfate de sodium) pour former du sulfate de calcium. Le composé de calcium mis en oeuvre à la première étape est avantageusement un composé hydrosoluble. Le chlorure de calcium est préféré.

A l'issue de la première étape, les cristaux de sulfate de calcium sont écartés de la saumure. Le moyen mis en oeuvre à cet effet n'est pas critique. Il comprend avantageusement une filtration ou une sédimentation suivie d'une décantation.

Dans la deuxième étape du procédé selon l'invention, la solution aqueuse recueillie après séparation des cristaux de la première étape est soumise à une évaporation pour cristalliser du chlorure de sodium. Les paramètres de l'évaporation (notamment la température, la pression et le taux d'évaporation) sont choisis de manière à éviter la cristallisation simultanée de composés indésirables tels que du chlorure de potassium ou du sulfate de sodium. Les valeurs optimum de ces paramètres vont dépendre de la concentration de la saumure, de ses teneurs en chlorure de potassium et en ions sulfate et, le cas échéant, des autres impuretés présentes. Elles peuvent être déterminées aisément par un travail de routine, au départ des diagrammes d'équilibre liquide-solide, notamment du diagramme Na-K-Cl-SO₄-H₂0, accessibles au départ des informations de la littérature.

A l'issue de la deuxième étape, on sépare les cristaux de chlorure de sodium de l'eau mère. Ladite séparation peut être réalisée par tout moyen adéquat, par exemple par filtration, par centrifugation ou par sédimentation suivie d'une décantation.

Dans la troisième étape du procédé selon l'invention, l'eau mère de la deuxième étape est soumise à un refroidissement contrôlé pour insolubiliser et cristalliser le chlorure de potassium.

Conformément à l'invention, le composé du calcium est mis en oeuvre à la première étape en une quantité déficitaire par rapport à celle qui est nécessaire pour convertir la totalité des ions sulfate en sulfate de calcium. De manière plus précise, la quantité de composé du calcium mis en oeuvre à la première étape est . réglée en fonction de la teneur en potassium de la saumure, de telle sorte qu'une fraction des ions sulfate de la saumure précipite à l'état de glaubérite (composé mixte de sulfate de calcium et de sodium de formule générale CaSO₄.Na₂SO₄) à la première étape et que le solde des ions sulfate précipite avec la totalité des ions potassium, à l'état de glasérite (composé mixte de sulfate de potassium et de sodium de formule générale (Na₂SO₄.3 K₂SO₄) à la troisième étape. L'élimination des ions sulfate et des ions potassium par cristallisations successives de glaubérite et de glasérite est fondée sur une teneur en sulfate, dans la saumure, supérieure à celle nécessaire pour précipiter la totalité des ions potassium à l'état de glasérite. En pratique, la saumure doit dès lors comprendre une quantité molaire d'ions sulfate supérieure à 1,5 fois sa teneur molaire en ions potassium. Les paramètres du procédé à la première étape (la température et la quantité de composé de calcium mis en oeuvre), à la deuxième étape (la température, la pression et le taux d'évaporation) et à la troisième étape (la température et la pression) doivent être déterminés dans chaque cas particulier en fonction de la concentration de la saumure et de ses teneurs respectives en chlorure de potassium et en ions sulfate. Les valeurs optimum de ces paramètres peuvent être déterminées aisément par calcul et au départ des diagrammes d'équilibre liquide-solide.

En pratique, on obtient de bons résultats lorsque l'évaporation, à la deuxième étape, est exécutée à une température supérieure à 75 °C et n'excédant pas 200 °C (les températures de 80 à 120 °C étant préférées). La pression doit être adaptée à la température sélectionnée et peut être inférieure à la pression atmosphérique normale dans le cas des basses températures ou supérieure à celle-ci dans le cas des températures élevées. Le refroidissement à la troisième étape est avantageusement effectué à une température inférieure à 80 °C, de préférence de 10 à 70 °C, les températures voisines de la température ambiante (par exemple de 15 à 30 °C) étant recommandées.

Il peut arriver que la solution aqueuse recueillie de la première étape contienne des ions calcium dissous. A cet effet, selon une forme de réalisation particulière du procédé suivant l'invention, la solution aqueuse recueillie de la première étape est additionnée de carbonate de sodium avant d'exécuter l'évaporation à la deuxième étape. Dans cette forme de réalisation du procédé selon l'invention, le carbonate de sodium a pour fonction de réagir avec les ions calcium résiduels pour cristalliser du carbonate de calcium que l'on élimine par tout moyen adéquat. La quantité de carbonate de sodium mise en oeuvre dans cette forme de réalisation de l'invention peut être déterminée aisément au départ de la quantité résiduelle d'ions calcium dans la solution aqueuse.

En plus du chlorure de potassium et des ions sulfate, la saumure de chlorure de sodium soumise au procédé selon l'invention peut éventuellement contenir d'autres impuretés dissoutes, notamment du carbonate de sodium. A cet effet, selon une autre forme de réalisation du procédé suivant l'invention, la saumure est traitée, en amont de la première étape, par tout moyen adéquat pour éliminer le carbonate de sodium qu'elle contient. A cet effet, dans une première variante d'exécution de cette forme de réalisation du procédé, on traite la saumure, en amont de la première étape, avec de l'acide chlorhydrique pour décomposer le carbonate de sodium et former du chlorure de sodium. Le dioxyde de carbone généré par la réaction est évacué de la saumure par tout moyen de dégazage adéquat. Dans une seconde variante d'exécution, on traite la saumure, en amont de la première étape, avec du dioxyde de carbone pour cristalliser du bicarbonate de sodium que l'on recueille.

Le procédé selon l'invention s'applique bien aux saumures de chlorure de sodium qui comprennent, par kg de matières sèches, de 550 à 800 g de chlorure de sodium, de 50 à 350 g de sulfate de sodium et de 5 à 100 g de chlorure de potassium et, éventuellement, de 50 à 250 g de carbonate de sodium. Il trouve une application pour le traitement de l'eau de mer ou des saumures de chlorure de sodium obtenues par dissolution de sel gemme. L'invention est spécialement adaptée aux saumures résiduaires des traitements d'épuration des fumées contaminées par du chlorure d'hydrogène, au moyen de composés sodiques basiques tels que de l'hydroxyde de sodium, ou du bicarbonate de sodium. L'invention est spécialement adaptée au traitement des saumures produites en dispersant dans de l'eau, le résidu que l'on obtient après épuration d'une fumée provenant de l'incinération de déchets contenant des composés chlorés (notamment des déchets d'origine ménagère ou hospitalière ou certains déchets industriels), au moyen d'un réactif basique sélectionné parmi le carbonate de sodium, le bicarbonate de sodium et le sesquicarbonate de sodium. Dans cette application particulière du procédé selon l'invention, la saumure est de préférence soumise à un traitement préalable d'épuration en métaux lourds, par exemple en appliquant la technique décrite dans le document EP-B-603218 [SOLVAY (Société Anonyme)].

Des particularités et détails de l'invention vont ressortir de la description suivante des dessins annexés.

La figure 1 représente le schéma d'une forme de réalisation particulière du procédé selon l'invention.

La figure 2 montre un détail d'une variante de la forme de réalisation de la figure 1.

Dans ces figures, des mêmes notations de référence désignent des éléments identiques.

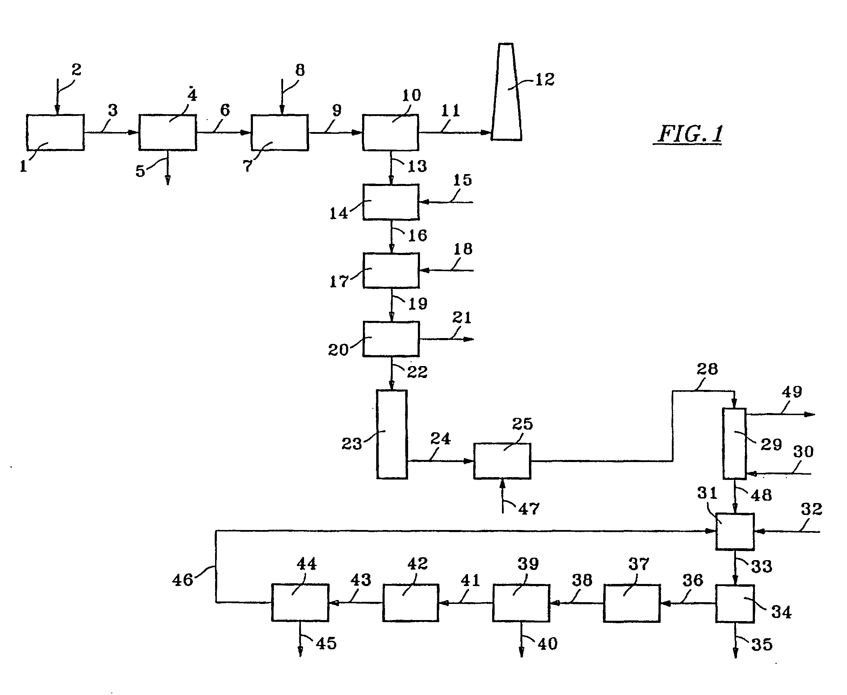

Dans la forme de réalisation de la figure 1, le procédé selon l'invention est appliqué à une saumure de chlorure de sodium obtenue au départ d'un résidu d'épuration d'une fumée générée par l'incinération de déchets contenant des composés chlorés organiques et inorganiques.

On sait que les déchets ménagers, les déchets hospitaliers ainsi que certains déchets d'origine industrielle contiennent des composés chlorés organiques et inorganiques, dont l'incinération donne lieu à l'émission de fumées contaminées par du chlorure d'hydrogène.

L'installation de la figure 1 comprend un four 1 que l'on alimente avec des déchets ménagers ou hospitaliers 2. La fumée 3 émise par le four 1 est contaminée par du chlorure d'hydrogène, des métaux lourds volatiles et du dioxyde de soufre. Elle est par ailleurs chargée de cendres. On la traite d'abord dans un dispositif de dépoussiérage 4 (par exemple un cyclone ou un filtre électrostatique), pour en séparer les cendres 5. La fumée dépoussiérée 6 recueillie du dépoussiéreur 4 est introduite dans une chambre de réaction 7 où on lui additionne du bicarbonate de sodium 8 à l'état d'une poudre. Le bicarbonate de sodium est introduit dans la fumée en une quantité suffisante pour décomposer la totalité du chlorure d'hydrogène et du dioxyde de soufre de la fumée et former du chlorure de sodium et du sulfate de sodium. La fumée 9 recueillie de la chambre de réaction 8 est traitée sur un filtre 10 pour la dépoussiérer et la fumée ainsi dépoussiérée 11 est évacuée à la cheminée 12. Le filtre 10 comprend de préférence un filtre à tissu filtrant (par exemple un filtre à manches).

Les poussières 13 retenues dans le filtre 10 comprennent du chlorure de sodium, du sulfate de sodium, du chlorure de potassium, des métaux lourds et du carbonate de sodium provenant de l'excès de bicarbonate de sodium mis en oeuvre. Elles sont envoyées dans une chambre de dispersion 14 où on les disperse dans de l'eau 15, de manière à dissoudre le chlorure de sodium et les autres composés hydrosolubles des poussières. On utilise avantageusement de l'eau ayant servi au lavage des cendres 5. Le milieu aqueux 16 recueilli de la chambre de dissolution 14 comprend une solution aqueuse de chlorure de sodium, contaminée par des impuretés dissoutes qui comprennent notamment des métaux lourds, du chlorure de potassium, du sulfate de sodium et du carbonate de sodium. Le milieu aqueux 16 est envoyé dans une chambre de réaction 17 où on lui additionne une quantité suffisante d'hydroxyde de sodium 18 pour précipiter les métaux lourds à l'état d'hydroxydes. La suspension aqueuse 19 recueillie de la chambre de réaction 17 est envoyée sur un filtre 20 où on sépare un précipité 21 comprenant les hydroxydes de métaux lourds et, le cas échéant, divers autres composés insolubles résiduels. Le filtrat 22 est envoyé dans une colonne 23 où il circule au contact d'une résine chélatante pour éliminer les dernières traces de métaux lourds. On recueille de la colonne 23 une saumure de chlorure de sodium 24. Celle-ci est sensiblement saturée en chlorure de sodium et elle est contaminée par du chlorure de potassium, du sulfate de sodium et du carbonate de sodium. Elle contient par exemple, par kg de matière sèche, de 700 à 750 g de chlorure de sodium, de 10 à 50 g de chlorure de potassium, environ 100 g de sulfate de sodium et environ 100 g de carbonate de sodium.

Conformément à l'invention, la saumure 24 est introduite dans une chambre de réaction 25 où on la traite avec une solution aqueuse d'acide chlorhydrique 47 en quantité suffisante pour décomposer le carbonate de sodium et former du chlorure de sodium. La saumure 28 recueillie de la chambre de réaction 25 est soumise à un balayage avec un courant d'air 30 dans une colonne 29, pour évacuer le dioxyde de carbone 49 généré par la décomposition du carbonate de sodium. Dans une chambre de réaction 31 située en aval de la colonne 30, on additionne du chlorure de calcium 32 à la saumure dégazée 48 sortant de la colonne 29, pour précipiter une partie des ions sulfate à l'état de glaubérite (sulfate double de calcium et de sodium). Le chlorure de calcium 32 est toutefois mis en oeuvre en une quantité insuffisante pour réagir avec la totalité des ions sulfate de la saumure 48. La suspension aqueuse 33 recueillie de la chambre 31 est traitée sur un filtre 34 où on sépare le précipité de glaubérite 35, que l'on évacue, et une solution aqueuse 36. On envoie celle-ci dans un évaporateur-cristalliseur 37 où on la soumet à une évaporation partielle. La pression, la température et le taux d'évaporation dans l'évaporateur-cristalliseur 37 sont choisis pour cristalliser du chlorure de sodium, en évitant expressément de cristalliser d'autres composés, en particulier du chlorure de potassium et du sulfate de sodium. L'évaporation peut par exemple être effectuée à une température de 80 à 120 °C. On soutire du cristalliseur 37 un brouet de cristaux 38 duquel on recueille, sur un filtre 39, des cristaux de chlorure de sodium 40 de grande pureté, que l'on valorise tels quels, par exemple dans un processus industriel.

L'eau mère 41 du cristalliseur 37 contient du chlorure de potassium et du sulfate de sodium et elle ne peut pas être éliminée telle quelle dans l'environnement. Elle est traitée dans un cristalliseur 42 où elle est refroidie à une température suffisamment basse (par exemple à la température ambiante de 20 à 25 °C) pour cristalliser de la glasérite (sulfate double de potassium et de sodium). On soutire du cristalliseur 42 un brouet de cristaux 43 que l'on soumet à une filtration 44. Les cristaux 45 séparés du brouet sont évacués, par exemple dans une décharge publique, et l'eau mère 46 est recyclée dans la chambre de réaction 31.

Dans une variante du procédé selon l'invention, il peut se révéler souhaitable de diluer l'eau mère 41 avec un complément d'eau (non représenté), pour éviter que du chlorure de sodium cristallise dans le cristalliseur 42.

Dans l'exécution du procédé qui vient d'être décrit, la quantité de chlorure de calcium 32 introduite dans la chambre de cristallisation 31 est calculée en fonction des teneurs respectives en sulfate de sodium et en chlorure de potassium dans la saumure 48, de manière que la totalité du potassium soit précipité à l'état de glasérite dans le cristalliseur 42 et que le solde d'ions sulfate soit précipité à l'état de glaubérite dans la chambre de réaction 31.

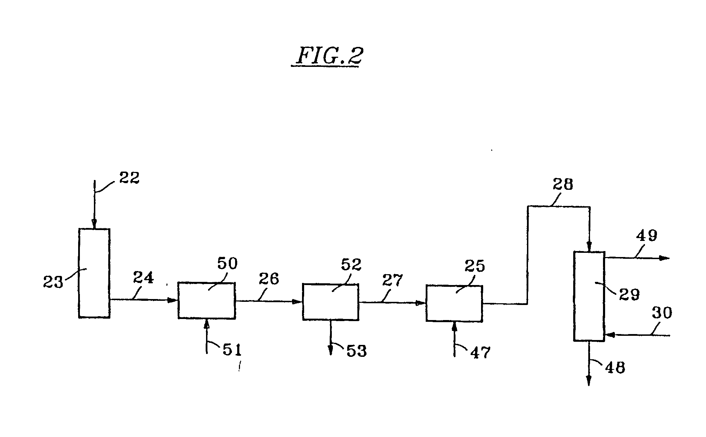

Dans la variante d'exécution schématisée à la figure 2, la saumure 24 (contaminée par du chlorure de potassium, des ions sulfate et du carbonate de sodium) est traitée dans une chambre de réaction 50 avec une quantité suffisante de dioxyde de carbone 51 pour décomposer le carbonate de sodium et cristalliser du bicarbonate de sodium. On recueille une suspension aqueuse 26, que l'on traite sur un filtre 52 pour séparer les cristaux de bicarbonate de sodium 53. La saumure 27 recueillie du filtre 52 est ensuite traitée comme exposé plus haut, en référence à la figure 1, d'abord dans la chambre de réaction 25 avec de l'acide chlorhydrique 47 pour la débarrasser des dernières traces de carbonate de sodium, puis dans la colonne de dégazage 29 pour éliminer le CO₂ généré dans la chambre 25. Cette variante d'exécution du procédé selon l'invention présente l'avantage de récupérer du bicarbonate de sodium qu'il est possible de valoriser dans la chambre de réaction 7 (figure 1) pour épurer la fumée 6.

## Revendications

1. Procédé pour la production de cristaux de chlorure de sodium au départ d'une saumure de chlorure de sodium contaminée par du chlorure de potassium et des ions sulfate, selon lequel,
- dans une première étape, on additionne un composé du calcium à la saumure pour précipiter du sulfate de calcium que l'on écarte et on recueille une solution aqueuse;
- dans une deuxième étape, on soumet la solution aqueuse de la première étape à une évaporation pour cristalliser du chlorure de sodium et on recueille séparément des cristaux de chlorure de sodium et une eau mère; et,
- dans une troisième étape, on soumet l'eau mère de la deuxième étape à un refroidissement pour cristalliser une partie au moins du chlorure de potassium, **caractérisé en ce qu'**on règle la quantité de composé de calcium à la première étape et le refroidissement à la troisième étape de manière que les ions sulfate précipitent à l'état de glaubérite à la première étape et de glasérite à la troisième étape.

2. Procédé selon la revendication 1, **caractérisé en ce que** le composé du calcium comprend du chlorure de calcium.

3. Procédé selon la revendication 1 ou 2, **caractérisé en ce qu'**on exécute l'évaporation à une température de 80 à 120 °C et on exécute le refroidissement à une température de 10 à 70 °C.

4. Procédé selon l'une quelconque des revendications 1 à 3, **caractérisé en ce qu'**avant la deuxième étape, on additionne du carbonate de sodium à la solution aqueuse recueillie de la première étape pour précipiter les ions calcium résiduaires qu'elle contient, à l'état de carbonate de calcium.

5. Procédé selon l'une quelconque des revendications 1 à 4, **caractérisé en ce que**, dans le cas où la saumure est contaminée par du carbonate de sodium, on la traite, avant la première étape, avec de l'acide chlorhydrique pour décomposer ledit carbonate de sodium.

6. Procédé selon l'une quelconque des revendications 1 à 5, **caractérisé en ce que** la saumure contient, par kg de matières sèches, de 550 à 800 g de chlorure de sodium, de 50 à 350 g de sulfate de sodium et de 5 à 100 g de chlorure de potassium.

7. Procédé selon la revendication 6, **caractérisé en ce que** la saumure contient, par kg de matières sèches, de 50 à 250 g de carbonate de sodium.

8. Procédé selon l'une quelconque des revendications 1 à 7, **caractérisé en ce qu'**on met en oeuvre, dans l'eau mère, une quantité d'eau suffisante pour éviter de cristalliser du chlorure de sodium à la troisième étape.

9. Procédé selon l'une quelconque des revendications 1 à 8, **caractérisé en ce que** la saumure mise en oeuvre à la première étape est obtenue au départ d'un résidu de l'épuration d'un gaz contaminé par du chlorure d'hydrogène, au moyen d'un composé basique du sodium.

10. Procédé selon la revendication 9, **caractérisé en ce que** le composé basique comprend du bicarbonate de sodium et **en ce que** la saumure contient du carbonate de sodium et est traitée, avant la première étape, avec du dioxyde de carbone pour cristalliser du bicarbonate de sodium que l'on recueille et recycle dans le composé basique.

## Patentansprüche

1. Verfahren zur Herstellung von Natriumchloridkristallen, ausgehend von einer Natriumchloridsohle, welche durch Kaliumchlorid und Sulfationen kontaminiert ist, worin
- in einer ersten Stufe eine Calciumverbindung zur Sohle zugesetzt wird, um Calciumsulfat auszufällen, welches entfernt wird, und eine wäßrige Lösung gesammelt wird;
- in einer zweiten Stufe die wäßrige Lösung der ersten Stufe einer Verdampfung unterworfen wird, um das Natriumchlorid zu kristallisieren, und die Natriumchloridkristalle und eine Mutterlauge getrennt gesammelt werden; und
- in einer dritten Stufe die Mutterlauge der zweiten Stufe einem Abkühlen unterworfen wird, um wenigstens einen Teil des Kaliumchlorids zu kristallisieren,
**dadurch gekennzeichnet, daß** die Menge der Calciumverbindung in der ersten Stufe und das Abkühlen in der dritten Stufe auf eine Weise erfolgt, daß die Sulfationen als Glauberit in der ersten Stufe und als Glaserit in der dritten Stufe ausgefällt werden.

2. Verfahren nach Anspruch 1, **dadurch gekennzeichnet, daß** die Calciumverbindung Calciumchlorid umfaßt.

3. Verfahren nach Anspruch 1 oder 2, **dadurch gekennzeichnet, daß** das Verdampfen bei einer Temperatur von 80 bis 120°C durchgeführt wird und das Abkühlen bei einer Temperatur von 10 bis 70°C ausgeführt wird.

4. Verfahren nach einem der Ansprüche 1 bis 3, **dadurch gekennzeichnet, daß** vor der zweiten Stufe Natriumcarbonat zur entfernten wäßrigen Lösung der ersten Stufe zugesetzt wird, um die verbliebenen Calciumionen, welche diese enthält, als Calciumcarbonat auszufällen.

5. Verfahren nach einem der Ansprüche 1 bis 4, **dadurch gekennzeichnet, daß** man im Fall, daß die Sohle durch Natriumcarbonat verunreinigt ist, diese vor der ersten Stufe mit Chlorwasserstoffsäure behandelt, um das Natriumcärbonat zu zersetzen.

6. Verfahren nach einem der Ansprüche 1 bis 5, **dadurch gekennzeichnet, daß** die Sohle pro kg an trockenen Materialien 550 bis 800 g Natriumchlorid, 50 bis 350 g Natriumsulfat und 5 bis 100 g Kaliumchlorid enthält.

7. Verfahren nach Anspruch 6, **dadurch gekennzeichnet, daß** die Sohle pro kg an trockenen Materialien 50 bis 250 g Natriumcarbonat enthält.

8. Verfahren nach einem der Ansprüche 1 bis 7, **dadurch gekennzeichnet, daß** in der Mutterlauge eine ausreichende Wassermenge verwendet wird, um die Kristallisation von Natriumchlorid in der dritten Stufe zu verhindern.

9. Verfahren nach einem der Ansprüche 1 bis 8, **dadurch gekennzeichnet, daß** die in der ersten Stufe verwendete Sohle ausgehend von einem Rückstand aus der Reinigung eines Gases, welches durch Chlorwasserstoff kontaminiert ist, mittels einer basischen Natriumverbindung erhalten wird.

10. Verfahren nach Anspruch 9, **dadurch gekennzeichnet, daß** die basische Verbindung Natriumbicarbonat umfaßt, und daß die Sohle Natriumcarbonat umfaßt und vor der ersten Stufe mit Kohlendioxid behandelt wird, um Natriumbicarbonat zu kristallisieren, welches entfernt und in die basische Verbindung recycliert wird.

## Claims

1. Process for the production of sodium chloride crystals from a sodium chloride brine contaminated by potassium chloride and sulphate ions, according to which,
- in a first stage, a calcium compound is added to the brine to precipitate calcium sulphate, which is isolated, and an aqueous solution is collected,
- in a second stage, the aqueous solution from the first stage is subjected to evaporation, to crystallize sodium chloride, and sodium chloride crystals and an aqueous mother liquor are collected separately, and,
- in a third stage, the aqueous mother liquor from the second stage is subjected to cooling in order to crystallize at least a portion of the potassium chloride,
**characterized in that** the amount of calcium compound in the first stage and the cooling in the third stage are adjusted so that the sulphate ions precipitate in the form of glauberite in the first stage and of glaserite in the third stage.

2. Process according to Claim 1, **characterized in that** the calcium compound comprises calcium chloride.

3. Process according to Claim 1 or 2, **characterized in that** the evaporation is carried out at a temperature of 80 to 120°C and the cooling is carried out at a temperature of 10 to 70°C.

4. Process according to any one of Claims 1 to 3, **characterized in that**, before the second stage, sodium carbonate is added to the aqueous solution collected from the first stage to precipitate the residual calcium ions which it comprises in the form of calcium carbonate.

5. Process according to any one of Claims 1 to 4, **characterized in that**, in the case where the brine is contaminated by sodium carbonate, it is treated, before the first stage, with hydrochloric acid in order to decompose the said sodium carbonate.

6. Process according to any one of Claims 1 to 5, **characterized in that** the brine comprises, per kg of dry matter, from 550 to 800 g of sodium chloride, from 50 to 350 g of sodium sulphate and from 5 to 100 g of potassium chloride.

7. Process according to Claim 6, **characterized in that** the brine comprises, per kg of dry matter, from 50 to 250 g of sodium carbonate.

8. Process according to any one of Claims 1 to 7, **characterized in that** use is made, in the aqueous mother liquor, of an amount of water sufficient to prevent sodium chloride from crystallizing in the third stage.

9. Process according to any one of Claims 1 to 8, **characterized in that** the brine employed in the first stage is obtained from a residual material from the purification, by means of a basic sodium compound, of a gas contaminated by hydrogen chloride.

10. Process according to Claim 9, **characterized in that** the basic compound comprises sodium bicarbonate and **in that** the brine comprises sodium carbonate and is treated, before the first stage, with carbon dioxide in order to crystallize sodium bicarbonate, which is collected and recycled in the basic compound.
